# EUROPÄISCHE PATENTSCHRIFT

(11) **EP 1 656 281 B1**
(45) Veröffentlichungstag und Bekanntmachung des Hinweises auf die Patenterteilung: **07.10.2009**
(21) Anmeldenummer: 04738891.3
(22) Anmeldetag: 08.07.2004
(51) Int. Cl.: B60R 21/01, G01S 15/93

(54) **Sicherheitsvorrichtung mit Aufprallerkennung unterberücksichtigung von Umwelteinflüssen**
Safety device with collision recognition taking environmental factors into account
Dispositif de sécurite à identification de collision, compte tenu d'influences environnementales

(30) Priorität: 10.07.2003 DE 10331212
(43) Veröffentlichungstag der Anmeldung: 17.05.2006
(73) Patentinhaber: ROBERT BOSCH GMBH, 70442 Stuttgart (DE)
(72) Erfinder: KUTTENBERGER, Alfred, 71696 Moeglingen (DE); THEISEN, Marc, 74354 Besigheim (DE); MAIER, Ralf, 70839 Gerlingen (DE)
(86) Internationale Anmeldenummer: PCT/DE2004/001475
(87) Internationale Veröffentlichungsnummer: WO 2005/007459

(56) Entgegenhaltungen:
- WO-A-98/00730
- DE-A- 10 141 886
- US-A- 6 151 539
- US-A1- 2003 051 530

## Beschreibung

### STAND DER TECHNIK

Die vorliegende Erfindung betrifft ein Rückhaltesystem für Fahrzeuge, und betrifft insbesondere eine Sicherheitsvorrichtung für Fahrzeuge, die bei oder vor einem Aufprall eines Fahrzeugs auf ein Hindernis aktivierbar ist.

Derzeit wird in Fahrzeugen eine Vielfalt von Sensormitteln eingesetzt. Diese Sensormittel dienen zum einen der Erfassung von umgebenden Objekten, wie sie beispielsweise mit Ultraschallsensoren durchgeführt werden, zum anderen einer Aufprallerkennung des Fahrzeugs durch Erfassung hoher Beschleunigungswerte mittels Beschleunigungssensoren.

Weitere Sensormittel in Fahrzeugen umfassen Sensoren zur Erkennung von Umweltgrößen, wie beispielsweise zur Erkennung von Regen, zur Messung von Temperaturen, zur Bestimmung einer Haftreibung zwischen Fahrzeug und Fahrbahn, zur Erfassung der Eigengeschwindigkeit und zur Messung einer Umgebungshelligkeit.

Derzeit werden Ultraschallsensoren in Fahrzeugen ausschließlich für Komfortfunktionalitäten, wie beispielsweise der Bereitstellung einer Einparkhilfe eingesetzt. Auf diese Weise dienen Ultraschallsensoren dazu, Abstände und Veränderungen von Abständen zu Objekten zu erfassen, die sich in unmittelbarer Fahrzeugnähe befinden.

Durch Auswertung der Ultraschallsignale wird dem Fahrer eine Entfernungsabschätzung zu den umgebenden Objekten erleichtert, so dass ein Aufprall, insbesondere bei niedrigen Geschwindigkeiten, vermieden werden kann.

Es ist zu erwarten, dass Ultraschallsensoren in Zukunft vielfältig eingesetzt werden können, da deren Kosten gering sind. Somit werden Ultraschallsensoren bei vielen Fahrzeugen zur Serienausstattung gehören. Da die Ultraschallsensoren prinzipiell zur Erfassung eines Aufpralls herangezogen werden können, ist es wünschenswert, derartige Ultraschallsensoren auch zur Erkennung eines drohenden Aufpralls heranzuziehen. Der prozentual größte Anteil von Unfällen ereignet sich bei einer Relativgeschwindigkeit zwischen Fahrzeug und umgebendem Objekt, die in dem Meßbereich der Ultraschallsensoren liegt,so dass die Ultraschallsensoren zur Aufprallerkennung eingesetzt werden können.

Da es sich aber bei einer Erkennung eines Fahrzeugaufpralls auf ein Hindernis um äußerst sicherheitsrelevante Vorgänge handelt, müssen die von Ultraschallsensoren gelieferten Sensorsignale eine äußerst hohe Zuverlässigkeit aufweisen.

In nachteiliger Weise liefern Ultraschallsensorsysteme derzeit falsche oder gar keine Signale, wenn die auf die Ultraschallsensoren einwirkenden Umwelteinflüsse ungünstig sind. Beispielsweise besteht die Gefahr, dass die in Fahrbahnnähe eingesetzten Sensoren durch Regen oder Spritzwasser verschmutzen und somit falsche oder gar keine Entfernungswerte liefern. Bei niedrigen Temperaturen, verbunden mit Regen und Schnee, vereisen derartige Ultraschallsensoren häufig, was eine Zuverlässigkeit der von ihnen gelieferten Sensorsignale ebenfalls stark einschränkt.

Ein weiterer Nachteil von Ultraschallsensorsystemen besteht darin, dass der Ultraschall aus physikalischen Gründen ein Ausbreitungsmedium, nämlich die das Fahrzeug umgebende Luft benötigt. Bei einer Laufzeitmessung mittels Ultraschallsensoren, welche zur Erkennung einer Relativgeschwindigkeit zwischen Fahrzeug und Hindernis herangezogen wird, spielt somit die Luftbewegung, beispielsweise der Wind gegen den Sensor bei einer hohen Eigengeschwindigkeit, eine erhebliche Rolle. Aus den genannten Gründen ist es bisher unzweckmäßigerweise nicht möglich, die in Fahrzeugen vorhandenen Ultraschallsensoren zur Aufprallerkennung eines Fahrzeugs auf ein Hindernis heranzuziehen.

Die DE 37 16 146 A1 beschreibt einen Ultraschallsensor zum Anbau an Orten, vorzugsweise Fahrzeugen, die tiefen Temperaturen ausgesetzt sind.

Um die oben erwähnten Nachteile einer Vereisung zu beseitigen, ist der Ultraschallsensor dieser Publikation mit einer Heizvorrichtung versehen, die beispielsweise abhängig von der Temperatur am Einbauort regelbar ist, so dass ein Vereisen oder Zuschneien des Sensors und damit eine Beeinträchtigung der Empfindlichkeit bzw. der Funktionsfähigkeit verhindert wird. Der Ultraschallsensor dieser Publikation kann somit auch an Orten eingebaut werden, die einer Vereisung unterliegen.

Es ist jedoch ein Nachteil der in der obigen Publikation beschriebenen Vorrichtung, dass das Sensorsystem durch eine zusätzliche, zu regelnde Heizeinrichtung äußerst komplex und teuer wird. Weiterhin beseitigt die beschriebene Vorrichtung lediglich eine Verfälschung der Sensorsignale infolge einer Vereisung, während die übrigen, oben beschriebenen Umwelteinflüsse, wie beispielsweise eine Verschmutzung des Sensors und eine variable Eigengeschwindigkeit des den Sensor umgebenden Mediums, nicht ausgeschaltet werden können.

Weiterhin ist in der DE 101 21 519 A1 ein Ultraschall-Hindernisdetektor vorgeschlagen worden, welcher eine Detektierung externer Materie, wie Schnee oder Schlamm, die an dem Ultraschallsensor haftet, ermöglicht.

Bei dem in der Publikation beschriebenen Ultraschall-Hindernisdetektor erfolgt eine Detektion, ob externe Materie, wie Schnee oder Schlamm, an den Ultraschallsensoren haftet, anhand der Überwachung direkter Wellen von den Ultraschallsensoren. In nachteiliger Weise erfordert die Vorrichtung, die in der obigen Publikation beschrieben ist, einen zusätzlichen Ultraschallempfänger in der Nähe des Ultraschallsenders, der für eine Entfernungsmessung mittels indirekter Wellen bereitgestellt ist.

Somit wird der Aufbau der Ultraschallsensorvorrichtung in nachteiliger Weise komplexer und teurer. Weiterhin ist es unzweckmäßig, dass neben einem zur Messung herangezogenen Ultraschallsensor weitere Empfänger angeordnet sein müssen, wodurch eine Einbaugröße zunimmt.

Insbesondere ist es nicht möglich, dass der in der Publikation beschriebene Ultraschall-Hindernisdetektor eine Eigengeschwindigkeit des Sensorsystems bezüglich eines Ausbreitungsmediums erfasst.

Aus US 2003/0051530 A1 ist es bekannt, dass in Abhängigkeit von den Signalen einer Precrashsensorik die Rauschschwelle für einen Aufprallsensor gesenkt wird. Als Precrashsensor kann ein Ultraschallsensor verwendet werden. Der Precrashsensor für den Seitenaufprall kann mit einem Körperschallsensor oder einem Beschleunigungssensor als Plausibilitätssensor kombiniert werden.

### VORTEILE DER ERFINDUNG

Es ist daher eine Aufgabe der vorliegenden Erfindung, eine Sicherheitsvorrichtung für Fahrzeuge bereitzustellen, bei der ein Rückhaltesystem auf der Basis von Ultraschallsensormitteln zuverlässig auch bei nachteiligem Einfluss von Umwelteinflüssen auslösbar ist, wobei insbesondere Aufprallereignisse bei niedrigen Geschwindigkeiten sicher detektiert werden sollen.

Diese Aufgabe wird erfindungsgemäß durch eine Vorrichtung mit den Merkmalen des Patentanspruchs 1 gelöst. Ferner wird die Aufgabe durch ein im Patentanspruch 5 angegebenes Verfahren gelöst.

Weitere Ausgestaltungen der Erfindung ergeben sich aus den Unteransprüchen.

Ein wesentlicher Gedanke der Erfindung besteht darin, die von den Ultraschallsensormitteln gelieferten Sensorsignale nur dann für eine vorausschauende Aufprallerkennung einzusetzen, wenn sichergestellt ist, dass die Ultraschallsensoren nicht durch Umwelteinflüsse oder dergleichen in ihrer Funktionsweise beeinträchtigt sind. In vorteilhafter Weise wird in einer Steuereinrichtung anhand von dritten Sensorsignalen, welche durch dritte Sensormittel bereitgestellt werden, ermittelt, ob die von den Ultraschallsensormitteln bereitgestellten Sensorsignale korrekt sind oder nicht.

Ein besonderer Vorteil der Erfindung besteht darin, dass die dritten Sensormittel nicht zusätzlich am Fahrzeug angebracht werden, sondern dass als dritte Sensormittel vielmehr bereits vorhandene Sensoren des Fahrzeugs, wie beispielsweise Regensensoren, Temperatursensoren, Haftreibungssensoren, Video- bzw. Helligkeitssensoren und Systeme zur Bestimmung der Eigengeschwindigkeit bzw. der Haftreibung herangezogen werden.

Somit besteht ein erheblicher wirtschaftlicher Vorteil, da zusätzlich zu einer durch eine Beschleunigungssensorik erfassbaren Beschleunigung Ultraschallsignale zur Aufprallerkennung herangezogen werden können, ohne dass weitere Sensoren bzw. Überwachungseinheiten für Ultraschallsensorsysteme angebracht werden müssten.

Durch die Kombination herkömmlicher erster Sensormittel, die als Beschleunigungssensoren eine Erkennung einer starken Abbremsung bzw. eines Aufpralls eines Fahrzeugs bereitstellen, werden die Ultraschallsensorsysteme, die dazu geeignet sind, Abstände bei geringen Geschwindigkeiten zu messen, zur Verbesserung der Aufprallerkennung bzw. für eine Precrash-Sensorik herangezogen. Ein weiterer Vorteil des erfindungsgemäßen Verfahrens besteht darin, dass das Rückhaltesystem zum Schutz der Fahrzeuginsassen bei einem Aufprall des Fahrzeugs auf ein Hindernis in eine Rückfallebene schaltbar ist, wenn die Bewertung der von den dritten Sensormitteln ausgegebenen dritten Sensorsignale in der Steuereinrichtung ergibt, dass die von den Ultraschallsensormitteln ausgegebenen Ultraschallsensorsignale durch Umwelteinflüsse verfälscht sind. In dieser Rückfallebene bzw. Rückfallposition besteht der Vorteil, dass die Steuereinrichtungen entscheiden, nur aufgrund der von den ersten Sensormitteln, d.h. den als Beschleunigungssensoren ausgebildeten Sensormitteln, und den von diesen gelieferten ersten Sensorsignalen eine Auslöseentscheidung zu treffen.

Insbesondere ist es vorteilhaft, dass die Sicherheitsvorrichtung für Fahrzeuge neben ersten Sensormitteln zur Erfassung des Fahrzeugsaufpralls oder zur Ausgabe erster Sensorsignale eine Steuereinrichtung zur Ausgabe von Auslösesignalen in Abhängigkeit von den ersten Sensormitteln und ein Rückhaltesystem, das in Abhängigkeit von den ersten Sensorsignalen ausgelöst wird, zum Schutz der Fahrzeuginsassen bei dem Fahrzeugaufprall aufweist.

Die zweiten Sensormittel, die zur Erfassung von Hindernissen in Fahrzeugnähe und zur Ausgabe zweiter Sensorsignale bereitgestellt sind, sind in vorteilhafter Weise als Ultraschallsensoren ausgebildet. Die von den Ultraschallsensoren ausgegebenen zweiten Sensorsignale werden nur dann zur Auslöseentscheidung herangezogen, wenn von dritten Sensormitteln gelieferte dritte Sensorsignale anzeigen, dass Umwelteinflüsse auf die zweiten Sensormittel bzw. die Ultraschallsensoren, d.h. die Ultraschallsensormittel, für eine sichere Auslöseentscheidung keine Rolle spielen. Somit können die von den Ultraschallsensoren ausgegebenen zweiten Sensorsignale in vorteilhafter Weise nach einer Bewertung der von den dritten Sensormitteln ausgegebenen dritten Sensorsignale in der Steuereinrichtung zur Entscheidung über die Auslösung von Rückhaltemitteln des Rückhaltesystems eingesetzt werden.

Die von den ersten Sensormitteln erfassten Erfassungsgrößen betreffen im Allgemeinen Beschleunigungswerte, während die von den zweiten Sensormitteln bzw. Ultraschallsensoren zweiten erfassten Erfassungsgrößen im Wesentlichen Abständeund Relativgeschwindigkeiten zu den das Fahrzeug umgebenden Objekten betreffen. Mit Hilfe dieser Daten ist es möglich den Aufprallzeitpunkt, Aufprallwinkel und die Form des Objektes zu ermitteln.

Die von den dritten Sensormitteln erfassten dritten Erfassungsgrößen betreffen im Wesentlichen Umwelteinflüsse wie Regen, Temperatur, Haftreibung zwischen Fahrzeug und Fahrbahn, Umgebungshelligkeit und Eigengeschwindigkeit des Fahrzeugs.

Zweckmäßigerweise weist das Rückhaltesystem eine Vielzahl von Rückhaltemitteln, wie beispielsweise einen Fahrer-Airbag, einen Beifahrer-Airbag, einen Knie-Airbag, einen Fenster-Airbag, einen Gurtstraffer, Sitzaktuatoren und einen Überrollbügel auf.

Die ersten, zweiten und dritten Sensormittel, die beispielsweise als Beschleunigungssensoren, Ultraschallsensoren und Umweltsensoren ausgebildet sind, stellen ein Sensorsystem bereit, das in herkömmlicher Weise in einem Fahrzeug enthalten ist.

Die zur Erfassung von Umwelteinflüssen bereitgestellten dritten Sensormittel umfassen mindestens einen Regensensor, einen Temperatursensor, einen Haftreibungssensor, einen Videosensor bzw. Helligkeitssensor und einen Eigengeschwindigkeitssensor. In vorteilhafter Weise wird die Bewertung der von den dritten Sensormitteln ausgegebenen dritten Sensorsignale in der Steuereinrichtung mittels einer Prozessoreinheit durchgeführt, wobei in der Prozessoreinheit zweckmäßigerweise ein Auswertungsalgorithmus abläuft, der hardware- oder softwaremäßig bereitgestellt ist. Insbesondere ist es vorteilhaft, den Auswertungsalgorithmus zur Bewertung der von den dritten Sensormitteln ausgegebenen dritten Sensorsignale in der Prozessoreinheit eingebettet bereitzustellen.

In der Prozessoreinheit kann zweckmäßigerweise mittels eines von einem Haftreibungssensor oder mittels eines von einem anderen System zur Bestimmung der Haftreibung gelieferten Signals festgestellt werden, ob eine Verschmutzung und/oder Vereisung der zweiten Sensormittel bzw. der Ultraschallsensormittel zu befürchten ist.

### ZEICHNUNGEN

Ausführungsbeispiele der Erfindung sind in der Zeichnung dargestellt und in der nachfolgenden Beschreibung näher erläutert.

In der Zeichnung zeigt:

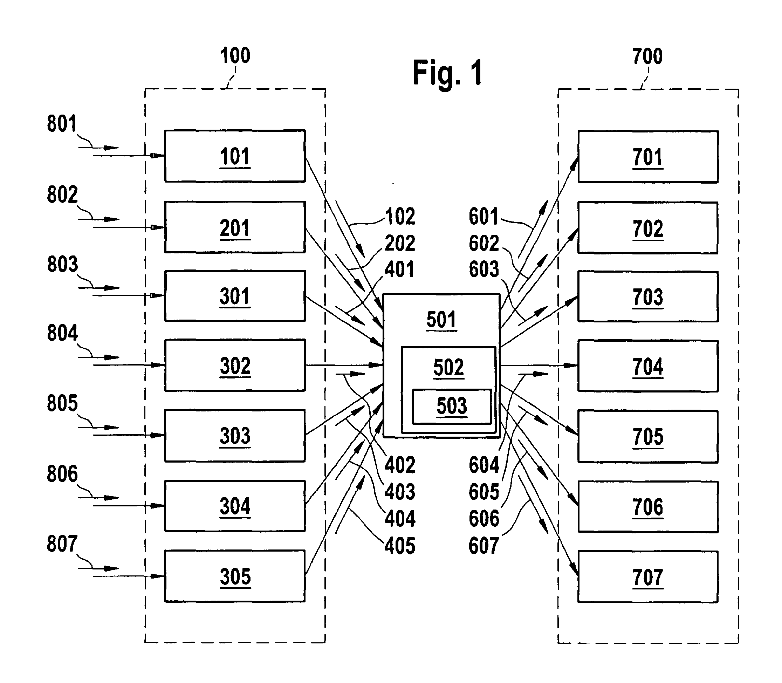

Fig. 1 ein Blockbild einer Sicherheitsvorrichtung für Fahrzeuge mit einer Steuereinrichtung, welche ein Rückhaltesystem in dem Fahrzeug in Abhängigkeit von Sensorsignalen steuert, die von einem Sensorsystem geliefert werden, gemäß einem bevorzugten Ausführungsbeispiel der vorliegenden Erfindung.

In den Figuren bezeichnen gleiche Bezugszeichen gleiche oder funktionsgleiche Komponenten oder Schritte.

### BESCHREIBUNG DES AUSFÜHRUNGSBEISPIELS

Fig. 1 zeigt ein veranschaulichendes Blockbild gemäß einem bevorzugten Ausführungsbeispiel der vorliegenden Erfindung. Die in Fig. 1 gezeigte Sicherheitsvorrichtung für Fahrzeuge besteht im Wesentlichen aus einem Sensorsystem 100, einer Steuereinrichtung 501 und einem Rückhaltesystem 700. Das Sensorsystem 100 ist durch erste, zweite und dritte Sensormittel 101, 201 und 301-305 gebildet. Die in dem Fahrzeug üblicherweise vorhandenen ersten, zweiten und dritten Sensormittel nehmen aus ihrer Umgebung nunmehr unterschiedliche Erfassungsgrößen, d.h. erste Erfassungsgrößen 801, zweite Erfassungsgrößen 802 und dritte Erfassungsgrößen 803-807 auf. Die von den ersten, zweiten und dritten Sensormitteln ausgegebenen Sensorsignale werden der Steuereinrichtung 501 zugeführt, welche mit dem Rückhaltesystem 700 verbunden ist. Das Rückhaltesystem 700 weist unterschiedliche Rückhaltemittel 701-707 auf, um in dem Fahrzeug befindliche Fahrzeuginsassen bei einem Aufprall des Fahrzeugs auf ein Hindernis vor Verletzungen zu schützen.

Insbesondere, aber nicht ausschließlich, weist das Rückhaltesystem ein Rückhaltemittel 701, das als ein Fahrer-Airbag ausgebildet ist, ein Rückhaltemittel 702, das als ein Beifahrer-Airbag ausgebildet ist, ein Rückhaltemittel 703, das als ein Knie-Airbag ausgebildet ist, ein Rückhaltemittel 704, das als ein Fenster-Airbag ausgebildet ist, ein Rückhaltemittel 705, das als ein oder mehrere Gurtstraffer ausgebildet ist, ein Rückhaltemittel 706, das in Form von Sitzaktuatoren bereitgestellt ist, und ein Rückhaltemittel 707, das als ein Überrollbügel ausgebildet ist, auf. Diese Rückhaltemittel werden durch entsprechende Auslösesignale 601, 602, 603, 604, 605, 606 und 607, die von der Steuereinrichtung 501 bereitgestellt werden, entsprechend einer erkannten Intensität eines Fahrzeugaufpralls auf ein Hindernis ausgelöst.

Während bei herkömmlichen Sicherheitsvorrichtungen für Fahrzeuge lediglich von ersten Sensormitteln 101 bereitgestellte erste Sensorsignale 102 zur Auslöseentscheidung in der Steuereinrichtung 501 herangezogen werden, stellt die bevorzugte Ausführungsform der vorliegenden Erfindung weitere Sensorsignale, nämlich zweite Sensorsignale 202 und dritte Sensorsignale 401, 402, 403, 404 und 405 bereit, die jeweils von zweiten Sensormitteln 201 und dritten Sensormitteln 301, 302, 303, 304 und 305 geliefert werden.

Es sei darauf hingewiesen, dass die von den ersten Sensormitteln 101 bereitgestellten ersten Sensorsignale 102 die wesentlichen, zur Auslösung des Rückhaltesystems benötigten Signale sind, da es sich bei den ersten Sensormitteln 101 um eine herkömmliche Crash-Sensorik, z.B. um eine Beschleunigungssensorik, handelt.

Somit liefern die von den ersten Sensormitteln 101 ausgegebenen ersten Sensorsignale 102 Beschleunigungswerte des Fahrzeugs. In der in Fig. 1 dargestellten Sicherheitsvorrichtung für Fahrzeuge weist die Steuereinrichtung 501 eine Prozessoreinheit 502 auf. In der Prozessoreinheit 502 läuft ein Auswertungsalgorithmus 503 ab, welcher derart gestaltet ist, dass die unterschiedlichen ersten, zweiten und dritten Sensorsignale 102, 202 und 401-405 verarbeitbar sind, um eine zuverlässige Auslöseentscheidung zu treffen und diese in Form von Auslösesignalen 601-607 an das Rückhaltesystem 700 weiterzugeben, woraufhin die Rückhaltemittel 701 bis 707 entsprechend ausgelöst werden. Der Auswertungsalgorithmus 503 kann in vorteilhafter Weise in der Prozessoreinheit 502 eingebettet bereitgestellt werden.

Im Folgenden werden das Sensorsystem 100 und die von dem Sensorsystem 100 gelieferten ersten, zweiten und dritten Sensorsignale 102, 202 und 401-405 näher erläutert werden. Die ersten Sensormittel 101 erfassen erste Erfassungsgrößen 801, die üblicherweise Beschleunigungswerte sind. Somit sind die ersten Sensormittel 101 als Beschleunigungssensoren bereitgestellt, woraufhin erste Sensorsignale 102 zu der Steuereinrichtung 501 weitergegeben werden. Als zweite Erfassungsgrößen 802 werden Werte eines Abstands bzw. einer relativen Geschwindigkeit des Fahrzeugs bezüglich seiner Umgebung bzw. bezüglich Hindernissen bereitgestellt.

Die zweiten Sensormittel 201 werden gemäß dem bevorzugten Ausführungsbeispiel der vorliegenden Erfindung als Ultraschallsensormittel eines Ultraschallsensorsystems bereitgestellt. Die von den zweiten Sensormitteln 201 ausgegebenen zweiten Sensorsignale 202 werden ebenfalls der Steuereinrichtung 501 zur Weiterverarbeitung zugeführt. Bei den dritten Sensormitteln 301, 302, 303, 304 und 305 handelt es sich um Sensormittel zur Erfassung von Umweltgrößen. Somit stellen die von den dritten Sensormitteln 301-305 ausgegebenen dritten Sensorsignale 401, 402, 403, 404 und 405 eine Information über Umwelteinflüsse auf das Fahrzeug, insbesondere aber auch auf die ersten und zweiten Sensormittel 101 und 201 bereit. Da es sich bei den zweiten Sensormitteln 201, wie oben erwähnt, um Ultraschallsensormittel handelt, welche auf Umwelteinflüsse empfindlich reagieren, werden die dritten Sensorsignale 401-405 insbesondere dazu herangezogen, die Funktionsfähigkeit der zweiten Sensormittel 201 zu überwachen. Die von den dritten Sensormitteln ausgegebenen dritten Sensorsignale 401-405 werden somit ebenfalls der Steuereinrichtung 501 zugeführt und in derselben weiterverarbeitet.

Im Folgenden werden die dritten Sensormittel 301-305 näher erläutert. Es sei darauf hingewiesen, dass die dritten Sensormittel 301-305 Sensoren darstellen, die üblicherweise in einem Fahrzeug angeordnet sind. In dem erfindungsgemäßen Ausführungsbeispiel stellen die dritten Sensormittel eine Information über Umwelteinflüsse, wie beispielsweise Regen, Temperatur, Haftreibung, Umgebungshelligkeit und Eigengeschwindigkeit des Fahrzeugs bereit. Die vorliegende Erfindung ist jedoch nicht auf eine Bereitstellung derartiger Umweltgrößen beschränkt, sondern sie ist, wie aus den angehängten Ansprüchen hervorgeht, vielmehr breit auszulegen.

Die in Fig. 1 veranschaulichten dritten Sensormittel 301 sind beispielsweise als Regensensoren ausgebildet, welche eine Umgebungsfeuchtigkeit bzw. -nässe erfassen. Mit Hilfe des von dem dritten Sensormittel 301 ausgegebenen dritten Sensorsignals 401 wird der Steuereinrichtung 501 die Gefahr einer möglichen Verschmutzung bzw. Befeuchtung der zweiten Sensormittel 201, d.h. der Ultraschallsensoren angezeigt, wobei der Auswertungsalgorithmus 503 entscheidet, ob die zweiten Sensormittel 201 beispielsweise aufgrund von Feuchtigkeit und/oder Verschmutzung in ihrer Funktion beeinträchtigt sind. In gleicher Weise dienen die von den dritten Sensormitteln 302 erfassten Erfassungsgrößen 804 dazu, eine Temperaturinformation für die Steuereinrichtung 501 bereitzustellen.

Die dritten Sensormittel 303 sind beispielsweise als Haftreibungssensoren ausgebildet. Anstatt eines separaten Sensors können auch die Schätzungen benutzt werden, wie sie in herkömmlichen ESP-und/oder ABS- und/oder ASR-Systemen verfügbar sind. Mit dem Begriff Haftreibungssensoren seien also im Folgenden sowohl die separaten Sensoren als auch solche Systeme zur Bestimmung der Haftreibung bezeichnet. Die mit den dritten Sensormitteln 303 erfassbaren Erfassungsgrößen 805 betreffen somit eine Haftreibung zwischen Fahrzeug und Fahrbahn. Aus dieser Haftreibung wird auf eine möglicherweise vereiste, mit Schnee bedeckte oder mit Wasser befeuchtete Fahrbahnunterlage geschlossen sowie eine dadurch mögliche Sensorverschmutzung und/oder -vereisung bewertet. Dies lässt auf eine Bedeckung der zweiten Sensormittel 201 beispielsweise mit Schnee etc. schließen.

In Kombination mit den von den dritten Sensormitteln 304 bereitgestellten dritten Sensorsignalen 404 ist es möglich, eine Erfassungsgröße 806 in Form einer Umgebungshelligkeit und/oder eines Videosignals bereitzustellen, wobei insbesondere ein Schneebelag auf einer Fahrbahn in vorteilhafter Weise über einen Helligkeits- oder Videosensor 304 erfasst wird.

Aus dem mit dem dritten Sensormittel 304 erfassten Schneebelag auf der Fahrbahn wird auf einen Schneebelag und/oder eine Vereisung der zweiten Sensormittel 201 und auf eine mögliche Beeinträchtigkeit der Funktionsfähigkeit der zweiten Sensormittel 201 geschlossen. In dem beispielhaften Blockdiagramm der vorliegenden Erfindung sind die dritten Sensormittel 305 als Eigengeschwindigkeitssensoren ausgebildet, welche ein entsprechendes drittes Sensorsignal 405 über die Eigengeschwindigkeit des Fahrzeugs bezüglich einer Fahrbahn an die Steuereinrichtung 501 liefern.

Die von dem dritten Sensormittel 305 erfasste Erfassungsgröße 807 betrifft somit die Eigengeschwindigkeit des Fahrzeugs und gibt einen Anhaltspunkt über die Bewegung der als Ultraschallsensoren ausgebildeten Sensormittel 201 bezüglich des Ultraschall-Ausbreitungsmediums, d.h. der Umgebungsluft des Fahrzeugs, wobei die Relativgeschwindigkeit zwischen Fahrzeug und Ultraschall-Ausbreitungsmedium einen erheblichen Einfluss auf die Funktionsfähigkeit der Ultraschallsensoren bzw. der zweiten Sensormittel 201 aufweist. Durch die Auswertung der von den dritten Sensormitteln 301-305 gelieferten dritten Sensorsignalen 401-405 ist es nunmehr in der Steuereinrichtung 501 möglich, eine zuverlässige Auslöseentscheidung auch auf der Basis der zweiten Sensorsignale 202, die von den zweiten Sensormitteln 201 geliefert werden, zu treffen. Somit lassen sich insbesondere Ultraschallsensormittel auch für vorausschauende sicherheitskritische Anwendungen, wie beispielsweise die Steuerung von in den Rückhaltesystemen enthaltenen Airbags, pyrotechnischen Gurtstraffern, reversiblen Gurtstraffern, sowie Sitzeinstellungen zur Verbesserung der Sitzposition bei einem Fahrzeugaufprall einsetzen.

Umwelteinflüsse, wie beispielsweise Schnee, Eis, Regen oder starker Wind, durch welchen die Funktionsfähigkeit der zweiten Sensormittel 201 beeinträchtigt werden kann, werden durch die dritten Sensormittel 301-305 zuverlässig erkannt. Der Steuereinrichtung 501 werden diese Umwelteinflüsse übermittelt, um zu verhindern, dass unzulässige Parameter in die Auslöseentscheidung der Rückhaltemittel 701-707 bzw. des gesamten Rückhaltesystems 700 eingehen. In dem Fall, dass die zweiten Sensormittel 201 zweite Sensorsignale 202 liefern, die keine oder nur eine unzureichende Information aufgrund der Umweltbedingungen liefern, schaltet die Steuereinrichtung 501 in eine Rückfallebene.

In der Rückfallebene verbleibt das Steuersystem, wenn die Bewertung der von den dritten Sensormitteln 301-305 ausgegebenen dritten Sensorsignale 401-405 in der Steuereinrichtung 501 ergibt, dass die von den zweiten Sensormitteln 201 ausgegebenen zweiten Sensorsignale 202 durch Umwelteinflüsse verfälscht sind. Enthalten die zweiten Sensorsignale 202 somit keine oder falsche Informationen bezüglich eines Fahrzeugaufpralls, wobei dies durch die dritten Sensorsignale 401-405 erkannt wird, wird eine Auslöseentscheidung ohne Hinzuziehung der von den zweiten Sensormitteln 201 gelieferten zweiten Sensorsignale 202 aufgrund der ersten Sensormittel 101, die als Beschleunigungssensoren ausgebildet sind, bzw. aufgrund der von den ersten Sensormitteln 101 gelieferten ersten Sensorsignal 102 getroffen. Somit werden die Rückhaltemittel 701-707 des Rückhaltesystems 700 dann, wenn das Rückhaltesystem in eine Rückfallebene geschaltet ist, nur auf der Grundlage der mittels der ersten Sensormittel 101 erfassten ersten Erfassungsgrößen 801 zum Erkennen des Fahrzeugsaufpralls auf das Hindernis ausgelöst.

Somit ist es ein wesentlicher Vorteil der Sicherheitsvorrichtung für Fahrzeuge und des Verfahrens zum Aktivieren einer Sicherheitsvorrichtung für Fahrzeuge bei einem Aufprall eines Fahrzeugs auf ein Hindernis, dass Umwelteinflüsse, wie beispielsweise Eis, Schnee, Regen oder Gegenwind zur Bewertung der Signale von als zweite Sensormittel 201 ausgebildeten Ultraschallsensoren erfassbar sind und der Steuereinrichtung 501 übermittelt werden, derart, dass verhindert wird, dass falsche oder keine Sensorinformationen die Auslöseentscheidung verfälschen.

Insbesondere ist es vorteilhaft, dass Umwelteinflüsse durch eine Kombination unterschiedlicher dritter Sensormittel 301-305 und eine Auswertung der entsprechenden dritten Sensorsignale 401-405 detektierbar sind. In vorteilhafter Weise weist das Sensorsystem 100 mindestens einen Beschleunigungssensor, d.h. einen Crash-Sensor 101, wie beispielsweise einen in einer Steuereinrichtung von Rückhaltemitteln befindlichen Beschleunigungssensor, auf.

Weiterhin weist das Sensorsystem 100 wenigstens einen oder mehrere Ultraschallsensormittel 201 zur vorausschauenden Crash-Sensierung und wenigstens ein weiteres, drittes Sensormittel 301-305 zur Erfassung von Umwelteinflüssen auf. Die dritten Sensormittel umfassen mindestens einen Regensensor 301, einen Temperatursensor 302, einen Haftreibungssensor 303, einen Videosensor bzw. Helligkeitssensor 304 und einen Eigengeschwindigkeitssensor 305. Wenn kein separater Haftreibungssensor 303 bereitgestellt werden kann, kann eine Information über die Haftreibung beispielsweise auch aus einem im Fahrzeug vorhandenen ABS-, ASR- oder ESP-System erhalten werden.

Die Gesamtheit der von den dritten Sensormitteln 301-305 gelieferten Informationen geht in eine separate Steuereinrichtung 501 oder in ein Steuergerät (nicht gezeigt) des Rückhaltesystems 700 ein, um die von den Ultraschallsensormitteln, d.h. den zweiten Sensormitteln 201 bereitgestellten zweiten Sensorsignale 202 korrekt bewerten zu können.

Eine in der Sicherheitsvorrichtung für Fahrzeuge bereitgestellte Steuereinrichtung 501 verfügt über mindestens eine Prozessoreinheit 502, auf welcher ein Auswertungsalgorithmus 503 abläuft. Der Auswertungsalgorithmus 503 entscheidet schließlich über ein Auslösen bzw. Nicht-Auslösen der unterschiedlichen, in dem Rückhaltesystem 700 angeordneten Rückhaltemittel 701-707.

In vorteilhafter Weise ist es nunmehr möglich, dass, falls eine Auswertung der dritten Sensorsignale 401-405, die von den dritten Sensormitteln 301-305 geliefert werden, ergibt, dass die Möglichkeit besteht, dass die Ultraschallsensormittel bzw. die zweiten Sensormittel 201 keine oder eine falsche Information über einen bevorstehenden Fahrzeugaufprall liefern, dann der Auswertungsalgorithmus 501, der eine Auslöseentscheidung bezüglich der Rückhaltemittel 701-707 trifft, in eine Rückfallebene schaltbar ist.

In dieser Rückfallebene wird eine Auslöseentscheidung bezüglich der Rückhaltemittel 701-707 ohne eine Hinzuziehung der von den zweiten Sensormitteln 201 gelieferten zweiten Sensorsignale 202 getroffen.

Die in dem Rückhaltesystem 700 angeordneten Rückhaltemittel 701-707 können jedwede Systeme in einem Fahrzeug betreffen, die den oder die Fahrzeuginsassen vor oder während eines Aufpralls in eine optimale Sitzposition bringen bzw. ihn oder sie in einer optimalen Sitzposition halten. Derartige Rückhaltemittel umfassen beispielsweise Gurtstraffer, die pyrotechnisch oder elektrisch betreibbar sind, Airbags, Überrollbügel oder Aktuatoren in Sitzen.

Obwohl die vorliegende Erfindung vorstehend anhand bevorzugter Ausführungsbeispiele beschrieben wurde, ist sie darauf nicht beschränkt, sondern auf vielfältige Weise modifizierbar.

Auch ist die Erfindung nicht auf die genannten Anwendungsmöglichkeiten beschränkt.

## Patentansprüche

1. Sicherheitsvorrichtung für Fahrzeuge, die bei einem Aufprall eines Fahrzeugs auf ein Hindernis aktivierbar ist zur Auslösung eines Rückhaltesystems (700) zum Schutz der Fahrzeuginsassen bei dem Fahrzeugaufprall, mit:
a) ersten Sensormitteln (101) zur Erfassung des Fahrzeugaufpralls und zur Ausgabe erster Sensorsignale (102);
b) einer Steuereinrichtung (501) zur Ausgabe von Auslösesignalen (601, 602, 603, 604, 605, 606, 607) in Abhängigkeit von den ersten Sensorsignalen (102); und
d) zweite Sensormittel (201) zur Erfassung von Hindernissen in Fahrzeugnähe und zur Ausgabe zweiter Sensorsignale (202);
e) dritten Sensormitteln (301, 302, 303, 304, 305) zur Erfassung von Umwelteinflüssen auf die zweiten Sensormittel (201) und zur Ausgabe dritter Sensorsignale (401, 402, 403, 404, 405) in Abhängigkeit von den Umwelteinflüssen,
wobei die von den zweiten Sensormitteln (201) ausgegebenen zweiten Sensorsignale (202) nach einer Bewertung der von den dritten Sensormitteln (301, 302, 303, 304, 305) ausgegebenen dritten Sensorsignale (401, 402, 403, 404, 405) in der Steuereinrichtung (501) zur Entscheidung über die Auslösung des Rückhaltesystems (700) herangezogen werden, **dadurch gekennzeichnet, dass** anhand der dritten Sensorsignale (401) ermittelt wird, ob die von Ultraschallsensoren (201) bereitgestellten zweiten Sensorsignale korrekt sind oder nicht.

2. Vorrichtung nach Anspruch 1,
**dadurch gekennzeichnet,**
**dass** die ersten Sensormittel (101) als Beschleunigungssensoren ausgebildet sind.

3. Vorrichtung nach Anspruch 1,
**dadurch gekennzeichnet,**
**dass** die ersten (101), zweiten (201) und dritten Sensormittel (301, 302, 303, 304, 305) ein Sensorsystem (100) ausbilden.

4. Vorrichtung nach den Ansprüchen 1 oder 3,
**dadurch gekennzeichnet,**
**dass** die dritten Sensormittel (301, 302, 303, 304, 305) mindestens eines der Mittel eines Regensensors (301), eines Temperatursensors (302), eines Haftreibungssensors oder eines weiteren Systems zur Bestimmung der Haftreibung (303), eines Videosensors (304) und eines Eigengeschwindigkeitssensors (305) umfassen.

5. Verfahren zum Aktivieren einer Sicherheitsvorrichtung für Fahrzeuge bei einem Aufprall eines Fahrzeugs auf ein Hindernis, mit den Schritten:
a) Erfassen erster Erfassungsgrößen (801) mittels erster Sensormittel (101) zum Erkennen des Fahrzeugaufpralls auf das Hindernis und Ausgeben erster Sensorsignale (102) aus den ersten Sensormitteln (101);
b) Bestimmen von Auslösesignalen (601, 602, 603, 604, 605, 606, 607) in Abhängigkeit von den ersten Sensorsignalen (102) mittels einer Steuereinrichtung (501); und
c) Auslösen eines Rückhaltesystems (700) in Abhängigkeit von den ersten Sensorsignalen (102) zum Schützen der Fahrzeuginsassen bei dem Fahrzeugaufprall auf das Hindernis,
d) Erfassen zweiter Erfassungsgrößen (802) mittels zweiter Sensormittel (201) zum Erkennen des Fahrzeugaufpralls auf das Hindernis und Ausgeben zweiter Sensorsignale (202) aus den zweiten Sensormitteln (201);
e) Erfassen dritter Erfassungsgrößen (803, 804, 805, 806, 807) mittels dritter Sensormittel (301, 302, 303, 304, 305) zum Erkennen von Umwelteinflüssen auf die zweiten Sensormittel (201) und Ausgeben dritter Sensorsignale (401, 402, 403, 404, 405) aus den dritten Sensormitteln (301, 302, 303, 304, 305) in Abhängigkeit von den Umwelteinflüssen,
wobei die von den zweiten Sensormitteln (201) ausgegebenen zweiten Sensorsignale (202) nach einer Bewertung der von den dritten Sensormitteln (301, 302, 303, 304, 305) ausgegebenen dritten Sensorsignale (401, 402, 403, 404, 405) in der Steuereinrichtung (501) zur Entscheidung über die Auslösung des Rückhaltesystems (700) herangezogen werden, **dadurch gekennzeichnet, dass** anhand der dritten Sensorsignale (401) ermittelt wird, ob die von Ultraschallsensoren (201) bereitgestellten zweiten Sensorsignale (202) korrekt sind oder nicht.

6. Verfahren nach Anspruch 5,
**dadurch gekennzeichnet,**
**dass** die dritten Sensormittel (301, 302, 303, 304, 305) mindestens einen Video- bzw. Helligkeitssensor aufweisen, mit welchem eine Umgebungshelligkeit erfasst wird.

7. Verfahren nach Anspruch 5,
**dadurch gekennzeichnet,**
**dass** die dritten Sensormittel (301, 302, 303, 304, 305) mindestens einen Temperatursensor (302) und mindestens einen Regensensor (301) aufweisen, mit welchen Umwelteinflüsse erfasst werden.

8. Verfahren nach Anspruch 5,
**dadurch gekennzeichnet,**
**dass** die dritten Sensormittel (301, 302, 303, 304, 305) mindestens einen separaten Haftreibungssensor oder mindestens ein weiteres System (303) zur Ermittlung der Haftreibung aus anderen im Fahrzeug vorhandenen Signalen aufweisen, mit welchem eine Haftreibung zwischen dem Fahrzeug und einer Fahrbahn bestimmt wird.

9. Verfahren nach Anspruch 8,
**dadurch gekennzeichnet,**
**dass** die mit dem mindestens einen weiteren System zur Ermittlung der Haftreibung oder mit dem mindestens einen Haftreibungssensor (303) bestimmte Haftreibung zwischen dem Fahrzeug und der Fahrbahn zur Bestimmung einer Verschmutzung und/oder einer Vereisung der zweiten Sensormittel (201) herangezogen wird.

10. Verfahren nach Anspruch 5,
**dadurch gekennzeichnet,**
**dass** das Rückhaltesystem (700) in eine Rückfallebene geschaltet wird, wenn die Bewertung der von den dritten Sensormitteln (301, 302, 303, 304, 305) ausgegebenen dritten Sensorsignale (401, 402, 403, 404, 405) in der Steuereinrichtung (501) ergibt, dass die von den zweiten Sensormitteln (201) ausgegebenen zweiten Sensorsignale (202) durch Umwelteinflüsse verfälscht werden.

11. Verfahren nach Anspruch 10,
**dadurch gekennzeichnet,**
**dass** Rückhaltemittel (701, 702, 703, 704, 705, 706, 707) des Rückhaltesystems (700) dann, wenn die Rückhaltesystemsteuereinrichtung (501) in eine Rückfallebene geschaltet ist, ohne Hinzuziehung der von den zweiten Sensormitteln 201 gelieferten Sensorsignalen 202 auf der Grundlage der mittels der ersten Sensormittel (101) erfassten ersten Erfassungsgrößen (801) zum Erkennen des Fahrzeugaufpralls auf das Hindernis ausgelöst werden.

12. Verfahren nach Anspruch 5,
**dadurch gekennzeichnet,**
**dass** mit den von den zweiten Sensormitteln (201) ausgegebenen zweiten Sensorsignalen (202) eine Relativgeschwindigkeit und der Abstand zwischen Fahrzeug und Hindernis, der Aufprallwinkel, der Aufprallzeitpunkt und die Objektform erfasst wird.

## Claims

1. Safety device for vehicles, which can be activated in the event of an impact of a vehicle with an obstacle, in order to trigger a restraint system (700) in order to protect the vehicle occupants when the vehicle impact occurs, having:
a) first sensor means (101) for sensing the vehicle impact and for outputting first sensor signals (102);
b) a control device (501) for outputting triggering signals (601, 602, 603, 604, 605, 606, 607) as a function of the first sensor signals (102); and
c) second sensor means (201) for sensing obstacles in the vicinity of a vehicle and for outputting second sensor signals (202);
d) third sensor means (301, 302, 303, 304, 305) for sensing environmental influences on the second sensor means (201) and for outputting third sensor signals (401, 402, 403, 404, 405) as a function of the environmental influences,
wherein, after the third sensor signals (401, 402, 403, 404, 405) which are output by the third sensor means (301, 302, 303, 304, 305) have been evaluated in the control device (501), the second sensor signals (202) which are output by the second sensor means (201) are used for the decision about the triggering of the restraint system (700), **characterized in that** on the basis of the third sensor signals (401) it is determined whether or not the second sensor signals which are made available by ultrasonic sensors (201) are correct.

2. Device according to Claim 1, **characterized in that** the first sensor means (101) are embodied as acceleration sensors.

3. Device according to Claim 1, **characterized in that** the first sensor means (101), second sensor means (201) and third sensor means (301, 302, 303, 304, 305) form a sensor system (100).

4. Device according to Claim 1 or 3, **characterized in that** the third sensor means (301, 302, 303, 304, 305) comprise at least one of the means of a rain sensor (301), a temperature sensor (302), a static friction sensor or a further system for determining the static friction (303), a video sensor (304) and a sensor (305) for sensing a vehicle's own speed.

5. Method for activating a safety device for vehicles in the event of an impact of a vehicle with an obstacle, having the steps:
a) sensing of first sensing variables (801) using first sensor means (101) for detecting the impact of a vehicle with the obstacle and outputting first sensor signals (102) from the first sensor means (101);
b) determination of triggering signals (601, 602, 603, 604, 605, 606, 607) as a function of the first sensor signals (102) by means of a control device (501); and
c) triggering of a restraint system (700) as a function of the first sensor signals (102) in order to protect the vehicle occupants when the vehicle impact with the obstacle occurs,
d) sensing of second sensing variables (802) using second sensor means (201) for detecting the impact of the vehicle with the obstacle, and outputting of second sensor signals (202) from the second sensor means (201);
e) sensing of third sensing variables (803, 804, 805, 806, 807) using third sensor means (301, 302, 303, 304, 305) for detecting environmental influences on the second sensor means (201), and outputting of third sensor signals (401, 402, 403, 404, 405) from the third sensor means (301, 302, 303, 304, 305) as a function of the environmental influences,
wherein after the third sensor signals (401, 402, 403, 404, 405) which are output by the third sensor means (301, 302, 303, 304, 305) have been evaluated in the control device (501), the second sensor signals (202) which are output by the second sensor means (201) are used for the decision about the triggering of the restraint system (700), **characterized in that** on the basis of the third sensor signals (401) it is determined whether or not the second sensor signals (202) which have been made available by ultrasonic sensors (201) are correct.

6. Method according to Claim 5, **characterized in that** the third sensor means (301, 302, 303, 304, 305) have at least one video sensor or brightness sensor with which ambient brightness is sensed.

7. Method according to Claim 5, **characterized in that** the third sensor means (301, 302, 303, 304, 305) have at least one temperature sensor (302) and at least one rain sensor (301) with which environmental influences are sensed.

8. Method according to Claim 5, **characterized in that** the third sensor means (301, 302, 303, 304, 305) have at least one separate static friction sensor or at least one further system (303) for determining the static friction from other signals which are present in the vehicle, with which system (303) static friction between the vehicle and an underlying surface is determined.

9. Method according to Claim 8, **characterized in that** the static friction between the vehicle and the underlying surface, which is determined with the at least one further system for determining the static friction or with the at least one static friction sensor (303), is used to determine soiling and/or icing up of the second sensor means (201).

10. Method according to Claim 5, **characterized in that** the restraint system (700) is switched into a fall-back level if the evaluation of the third sensor signals (401, 402, 403, 404, 405), which are output by the third sensor means (301, 302, 303, 304, 305), in the control device (501) reveals that the second sensor signals (202) which are output by the second sensor means (201) are falsified by environmental influences.

11. Method according to Claim 10, **characterized in that**, if the restraint system control device (501) is switched into a fall-back level, restraint means (701, 702, 703, 704, 705, 706, 707) of the restraint system (700) are triggered without using the sensor signals (202) supplied by the second sensor means (201) and on the basis of the first sensing variables (801) sensed using the first sensor means (101), in order to detect the vehicle impact with the obstacle.

12. Method according to Claim 5, **characterized in that** the second sensor signals (202) which are output by the second sensor means (201) are used to sense a relative speed and the distance between the vehicle and obstacle, the impact angle, the impact time and the shape of the object.

## Revendications

1. Agencement de sécurité pour véhicules, qui peut être activé lorsque le véhicule vient percuter un obstacle pour déclencher un système de retenue (700) destiné à protéger les passagers du véhicule lorsque le véhicule entre en collision, et présentant :
a) des premiers moyens de détection (101) qui détectent une collision du véhicule et qui délivrent des premiers signaux de détection (102),
b) un dispositif de commande (501) qui délivre les signaux de déclenchement (601, 602, 603, 604, 605, 606, 607) en fonction des premiers signaux de détection (102),
c) des deuxièmes moyens de détection (201) qui détectent des obstacles au voisinage du véhicule et qui délivrent des deuxièmes signaux de détection (202),
d) des troisièmes moyens de détection (301, 302, 303, 304, 305) qui détectent les effets de l'environnement sur les deuxièmes moyens de détection (201) et qui délivrent des troisièmes signaux de détection (401, 402, 403, 404, 405) en fonction des effets de l'environnement,
les deuxièmes signaux de détection (202) délivrés par les deuxièmes moyens de détection (201) étant utilisés après une évaluation dans le système de commande (501) des troisièmes signaux de détection (401, 402, 403, 404, 405) délivrés par les troisièmes moyens de détection (301, 302, 303, 304, 305) pour décider du déclenchement du système de retenue (700), **caractérisé en ce que**
au moyen des troisièmes signaux de détection (401), on détermine si les deuxièmes signaux de détection délivrés par des détecteurs (201) à ultrasons sont corrects ou non.

2. Agencement selon la revendication 1, **caractérisé en ce que** les premiers moyens de détection (101) sont configurés comme sondes d'accélération.

3. Agencement selon la revendication 1, **caractérisé en ce que** les premiers (101), les deuxièmes (201) et les troisièmes moyens de détection (301, 302, 303, 304, 305) forment un système de détection (100).

4. Agencement selon les revendications 1 ou 3, **caractérisé en ce que** les troisièmes moyens de détection (301, 302, 303, 304, 305) comprennent au moins l'un des moyens suivants : une sonde de précipitation (301), une sonde de température (302), une sonde d'adhérence ou un autre système de détermination de l'adhérence (303), une sonde vidéo (304) et une sonde de vitesse propre (305).

5. Procédé d'activation d'un agencement de sécurité de véhicule lorsque le véhicule vient percuter un obstacle, le procédé comprenant les étapes qui consistent à :
a) déterminer une grandeur de détection (801) au moyen de premiers moyens de détection (101) pour détecter la collision du véhicule sur l'obstacle et faire délivrer des premiers signaux de détection (102) par les premiers moyens de détection (101),
b) au moyen d'un dispositif de commande (501), déterminer des signaux de déclenchement (601, 602, 603, 604, 605, 606, 607) en fonction des premiers signaux de détection (102),
c) déclencher un système de retenue (700) en fonction des premiers signaux de détection (102) pour protéger les passagers du véhicule lorsque le véhicule vient percuter l'obstacle,
d) détecter des deuxièmes grandeurs de détection (802) au moyen de deuxièmes moyens de détection (201) qui détectent que le véhicule a percuté l'obstacle et faire délivrer des deuxièmes signaux de détection (202) par les deuxièmes moyens de détection (201),
e) déterminer des troisièmes grandeurs de détection (803, 804, 805, 806, 807) au moyen de troisièmes moyens de détection (301, 302, 303, 304, 305) qui détectent les effets de l'environnement sur les deuxièmes moyens de détection (201) et faire délivrer par les troisièmes moyens de détection (301, 302, 303, 304, 305) des troisièmes signaux de détection (401, 402, 403, 404, 405) en fonction des effets de l'environnement,
les deuxièmes signaux de détection (202) délivrés par les deuxièmes moyens de détection (201) étant utilisés après l'évaluation dans le dispositif de commande (501) des troisièmes signaux de détection (401, 402, 403, 404, 405) délivrés par les troisièmes moyens de détection (301, 302, 303, 304, 305) pour décider sur le déclenchement du système de retenue (700),
**caractérisé en ce que**
on détermine à l'aide des troisièmes signaux de détection (401) si les deuxièmes signaux de détection (202) délivrés par des sondes à ultrasons (201) sont corrects ou non.

6. Procédé selon la revendication 5, **caractérisé en ce que** les troisièmes moyens de détection (301, 302, 303, 304, 305) présentent au moins une sonde vidéo ou une sonde de luminosité qui permettent de déterminer la luminosité de l'environnement.

7. Procédé selon la revendication 5, **caractérisé en ce que** les troisièmes moyens de détection (301, 302, 303, 304, 305) présentent au moins une sonde de température (302) et au moins une sonde de précipitation (301) qui permettent de saisir les effets de l'environnement.

8. Procédé selon la revendication 5, **caractérisé en ce que** les troisièmes moyens de détection (301, 302, 303, 304, 305) présentent au moins une sonde séparée d'adhérence ou au moins un autre système (303) de détermination de l'adhérence à partir d'autres signaux présents dans le véhicule, qui permettent de déterminer l'adhérence entre le véhicule et la chaussée.

9. Procédé selon la revendication 8, **caractérisé en ce que** l'adhérence entre le véhicule et la chaussée déterminée à l'aide du ou des autres systèmes de détermination de l'adhérence ou par la ou les sondes d'adhérence (303) est utilisée pour la détermination de l'encrassement et/ou du givrage des deuxièmes moyens de détection (201).

10. Procédé selon la revendication 5, **caractérisé en ce que** le système de retenue (700) est basculé dans un plan en retrait si l'évaluation dans le dispositif de commande (501) des troisièmes signaux de détection (401, 402, 403, 404, 405) délivrés par les troisièmes moyens de détection (301, 302, 303, 304, 305) indiquent que les deuxièmes signaux de détection (202) délivrés par les deuxièmes moyens de détection (201) sont faussés par les effets de l'environnement.

11. Procédé selon la revendication 10, **caractérisé en ce que** des moyens de retenue (701, 702, 703, 704, 705, 706, 707) du système de retenue (700) sont déclenchés si le dispositif (501) de commande du système de retenue est commuté dans un plan en retrait sans tenir compte des signaux de détection (202) délivrés par les deuxièmes moyens de détection (201) sur base des premières grandeurs de détection (801) saisies au moyen des premiers moyens de détection (101) pour détecter que le véhicule est venu percuter l'obstacle.

12. Procédé selon la revendication 5, **caractérisé en ce que** la vitesse relative et la distance entre le véhicule et l'obstacle, l'angle de collision, l'instant de collision et la forme de l'objet sont détectés à l'aide des deuxièmes signaux de détection (202) délivrés par les deuxièmes moyens de détection (201).
